# EUROPEAN PATENT SPECIFICATION

(11) **EP 2 638 203 B1**
(45) Date of publication and mention of the grant of the patent: **27.12.2017**
(21) Application number: 11782725.3
(22) Date of filing: 02.11.2011
(51) Int. Cl.: D06M 13/207, D06M 15/333, D06M 15/643, B32B 27/00, B65D 65/42, D21H 17/24, D21H 17/36, D21H 17/59, D21H 19/32, D21H 19/34, D21H 19/60, C09D 5/00, C09D 129/04, C09D 183/04, C08G 77/12, C08G 77/20, D21H 17/60, D21H 17/70, D21H 19/12, D21H 19/20, D21H 21/14

(54) **GREASE RESISTANT COATING FOR FIBROUS MATERIALS**
SCHMIERFETTRESISTENTE BESCHICHTUNG FÜR FASERMATERIALIEN
REVÊTEMENT POUR MATÉRIAUX FIBREUX RÉSISTANT AUX GRAISSES

(30) Priority: 08.11.2010 GB 201018759
(43) Date of publication of application: 18.09.2013
(73) Proprietor: Dow Corning Corporation, Midland, Michigan 48686-0994 (US)
(72) Inventor: CREUTZ, Serge, B-4000 Liege (BE); DELOFFRE, Emmanuelle, B-6280 Gerpinnes (BE); PAREIN, Christian, B-1331 Rosieres (BE); VANDEMEULEBROUCKE, Flore, B-7170 Manage (BE); ZIOLKOWSKI, Nicolas, B-1400 Nivelles (BE)
(74) Representative: Murgitroyd & Company
(86) International application number: PCT/US2011/058897
(87) International publication number: WO 2012/064558

(56) References cited:
- US-A- 2 869 722
- US-A- 5 645 751
- US-A- 5 998 536
- US-A1- 2006 089 427
- US-B2- 7 459 213

## Description

### TECHNICAL FIELD

This invention relates to grease resistant coatings for fibrous materials, particularly paper and the like used for packaging but also nonwoven, woven or knitted textile materials. Greaseproof packaging is used mainly for ready-to-eat foods, for example in the fast food industry. Grease resistant coatings are required to form a coated paper which is oil repellant and water repellant, and which preferably should be glueable and printable.

### BACKGROUND OF THE INVENTION

Much greaseproof packaging is based on paper coated with fluorinated materials. There have been reports of potential health issues associated with some C8 based fluorine derivatives. Moreover, fluorinated materials are poorly biodegradable. There is thus a demand for grease resistant coatings which are not based on fluorinated materials and which preferably have improved biodegradability.

US5645751A describes a ready-to-use fabric composition and a fabric finish concentrate composition as well as a method of providing a stiffness to a fabric. US5998536A describes an aqueous polyorganosiloxane emulsion for the coating of textiles. US2869722A describes paper products having a release coating and method of preparation thereof. US7459213B2 describes a silicone composition and a paper treatment agent comprising the composition which is suitable to provide a paper substrate with water repellency and oil repellency. US 2006/089427A1 describes a paper treating agent capable of providing various kinds of paper substrates with water repellency and oil repellency, in particular, to a paper treating agent comprising organopolysiloxane and a cellulosic resin, which agent is safe and suitably used in the application for food.

### BRIEF SUMMARY OF THE INVENTION

According to the present invention there is provided an aqueous coating composition comprising dissolved polyvinyl alcohol and an emulsified organosilicon material, wherein the composition contains a saccharide of molecular weight below 2000.

The present invention also relates to use of the composition to enhance the grease resistance of a fibrous substrate, and to use of a saccharide of molecular weight below 2000 in a grease resistant aqueous coating composition comprising dissolved polyvinyl alcohol and an emulsified organosilicon material to reduce the viscosity of the composition while substantially retaining the barrier properties of the composition.

The present invention also relates to a process for the preparation of a coating composition in which an organosilicon material is mixed with an aqueous solution of polyvinyl alcohol and the mixture is homogenised to form an emulsion, wherein a saccharide of molecular weight below 2000 is mixed with the organopolysiloxane composition and the aqueous polyvinyl alcohol solution, either before or after homogenisation, preferably wherein further aqueous polyvinyl alcohol solution is mixed with the emulsion after homogenisation.

Further embodiments of the invention are as defined in the dependent claims.

An aqueous coating composition according to the present invention comprises dissolved polyvinyl alcohol and an emulsified organosilicon material, and contains a low molecular weight saccharide. By a low molecular weight saccharide we mean a saccharide of molecular weight below 2000.

The coating composition according to the invention provides coated fibrous materials having grease resistance, water repellency, glueability and printability by a single coating application using industry standard coater. By glueability we mean that the coated fibrous material will adhere to a conventional adhesive used in paper products such as an acrylic pressure sensitive adhesive or a polysaccharide gum. Furthermore, the aqueous coating compositions comprising dissolved polyvinyl alcohol and an emulsified organosilicon material, wherein the weight ratio of polyvinyl alcohol to organosilicon material is in the range from more than 2.1 up to 20.1 and the composition is free from any surfactant other than the polyvinyl alcohol avoid the requirement for surfactant and avoid any problems caused by migration of surfactant from a paper coating into the food being packaged.

The addition of low molecular weight saccharide according to the invention advantageously reduces the viscosity of the coating composition, while maintaining the barrier properties of the coated fibrous material. The lower viscosity allows easier application of the coating and tends to give a more uniform coated film. The lower viscosity brought by the saccharides allows also an increase in the solid content of the emulsions, resulting in less water to evaporate in the dryer section of the coater.

The invention further includes a process for the preparation of a coating composition in which an organosilicon material is mixed with an aqueous solution of polyvinyl alcohol and the mixture is homogenised to form an emulsion, wherein a saccharide of molecular weight below 2000 is mixed with the organopolysiloxane composition and the aqueous polyvinyl alcohol solution, either before or after homogenisation.

### DETAILED DESCRIPTION OF THE INVENTION

The organosilicon material is preferably a reactive material which is capable of undergoing reaction to improve its barrier properties, particularly its water repellency. The reactive organosilicon material can for example be a curable organopolysiloxane composition having components which are capable of reacting with each other. Alternatively a reactive organosilicon material can be a silane or polysiloxane capable of reacting with the fibrous material substrate, for example with cellulose if the substrate is paper. The organosilicon material can however be a material which dries to form a hydrophobic film without being reactive. Alternatively, the reactive organosilicon material does not include a silane.

A curable organopolysiloxane composition preferably comprises an organopolysiloxane containing alkenyl groups, an organopolysiloxane containing Si-H groups and a hydrosilylation catalyst.

The organopolysiloxane containing alkenyl groups preferably has at least two silicon-bonded alkenyl-functional groups per molecule. The alkenyl group is preferably linear having up to 6 carbon atoms, as exemplified by hexenyl, vinyl, allyl or pentenyl, or may be cycloalkenyl such as cyclohexenyl.

The organopolysiloxane containing alkenyl groups can in general contain terminal and/or pendant alkenyl groups. The organopolysiloxane containing alkenyl groups can for example be a linear organopolysiloxane having the general formula YX₂SiO(X₂SiO)ₓ(XYSiO)_{y}SiX₂Y
wherein each X denotes independently a phenyl group or an alkyl or cycloalkyl group having from 1 to 10 carbon atoms, for example, methyl, ethyl, propyl, butyl or cyclohexyl; each Y denotes an alkenyl group; and x and y are such that the organopolysiloxane has a viscosity at 25°C in the range from 50 to 5000mm²/s, most preferably 200 to 500mm²/s. Such organopolysiloxanes are alkenyl-terminated polydiorganosiloxanes. The organopolysiloxane containing alkenyl groups can for example be a vinyl-terminated polydiorganosiloxane such as a dimethylvinylsiloxy-terminated polydiorganosiloxane, or a hexenyl terminated polydiorganosiloxane, such as a dimethyl(5-hexenyl)siloxy-terminated polydiorganosiloxane. At least 90% of all the X substituents of the organopolysiloxane containing alkenyl groups (A) are preferably methyl groups, most preferably all being methyl groups. It is preferred that no more than 4% of all units of this organopolysiloxane are units with an alkenyl group, as otherwise there is the possibility of crosslinking the release coating composition too much upon curing. Preferably y=0. It is possible but not preferred that small amounts (preferably less than 2% of all the substituents present) of other substituents are present, for example hydroxyl groups.

The organopolysiloxane containing alkenyl groups can be a branched siloxane comprising one or more Q units of the formula (SiO_{4/2}), from 15 to 995 D units of the formula R^{b}2SiO2_{/2} and M units of the formula R*^{a}*R*^{b}*₂SiO_{1/2}, wherein the R*^{a}* and R^{b} substituents are selected from alkyl groups having 1 to 6 carbon atoms and alkenyl groups having 2 to 6 carbon atoms. Preferably the R^{b} substituents are alkyl groups, most preferably methyl groups. At least two, and preferably at least three, R*^{a}* substituents in such a Q-branched siloxane are alkenyl groups, as described in EP-A-1070734. Vinyl groups can also be present if desired as methylvinylsiloxane units. Such a siloxane may for example be a poly(dimethylsiloxane-silicate) copolymer having at least three vinyldimethylsilyl-terminated siloxane branches. The branched siloxane can also incorporate other terminal groups such as terminal trimethylsilyl (SiMe₃) and/or terminal hydroxydimethylsilyl (SiMe₂OH) groups. The Q branched siloxane can contain other additional branching groups, for example it can also incorporate T^{Vi} units. Branched siloxanes have the advantage that they allow faster cure than linear polymers with similar viscosities.

The organohydrogenpolysiloxane crosslinking agent containing Si-H groups generally contains at least three Si-H groups and may have the general formula:-

R*^{t}*₃SiO_{1/2}((CH₃)₂SiO_{2/2})*_{d}*(R^{t}₂SiO_{2/2})*ₑ*)SiO_{1/2}R^{t}*₃*

where each R*^{t}* may be an alkyl group having 1 to 4 carbon atoms or hydrogen, d is 0 or an integer and *e* is an integer such that *d* + *e* is from 8 to 400. Preferably the organopolysiloxane crosslinking agent containing Si-H groups comprises at least three methylhydrogensiloxane units. The crosslinking agent can for example be a poly(methylhydrogensiloxane) having trimethylsilyl terminal units or a dimethylsiloxane methylhydrogensiloxane copolymer having trimethylsilyl terminal units. The crosslinking agent can alternatively contain Si-H groups in a linked cyclic polyorganosiloxane structure. Such linked cyclic polyorganosiloxanes can be produced by reacting a cyclic polysiloxane containing at least two Si-H groups with a compound having aliphatic unsaturation or containing a hydroxy group, for example a silane or polyorganosiloxane having aliphatic unsaturation or containing a hydroxy group as described in US7378482 (EP 1499679).

Alternatively the cross-linking agent containing Si-H groups may be an MQ resin consisting of units of the general formula SiO_{4/2} and R*^{q}*₃SiO_{1/2} wherein at least three R*^{q}* substituents in the MQ resin molecule are hydrogen atoms and the remainder are alkyl groups, or may be a rake or comb polymer comprising a polydiorganosiloxane chain containing one or more T or Q unit having a subchain of diorganosiloxane and organohydrogensiloxane units attached thereto.

It is preferred that the crosslinking agent containing Si-H groups has a viscosity of from 5 to 1000mm²/s at 25°C, more preferably 20 to 350mm²/s, most preferably 50 to 300 mm²/s. The crosslinking agent is preferably present in an amount such that the molar ratio of the total number of Si-H groups in the coating composition to alkenyl groups in the composition is from 0.9:1 to 8:1, more preferably 1.1:1 to 4:1, most preferably 1.5:1 to 3:1. The crosslinking agent containing Si-H groups is typically present in an amount of 0.5 to 30% by weight based on the organopolysiloxane containing alkenyl groups.

The hydrosilylation catalyst preferably comprises a platinum group metal, that is a group VIII metal such as platinum, ruthenium, rhodium, palladium, osmium or indium. Suitable hydrosilylation catalysts include complexes or compounds of these platinum group metals, particularly platinum compounds or complexes including chloroplatinic acid, either in hexahydrate form or anhydrous form, and or a platinum-containing catalyst which is obtained by a method comprising reacting chloroplatinic acid with an aliphatically unsaturated organosilicon compound such as divinyltetramethyldisiloxane, platinum acetylacetonate, complexes of platinous halides with unsaturated compounds, for example, ethylene, propylene, organovinylsiloxanes and styrene, hexamethyldiplatinum, alkene-platinum-silyl complexes such as (COD)Pt(SiMeCl₂)₂, where COD is 1,5-cyclooctadiene and Me is methyl, PtCl₂.PtCl₃ and Pt(CN)₃. Alternatively the catalyst may be a rhodium complex, for example, RhCl₃(Bu₂S)₃. The catalyst is typically used at 40 to 250 parts per million by weight platinum (or other group VIII metal) based on the weight of organopolysiloxanes in the coating composition.

A curable organopolysiloxane composition comprising an organopolysiloxane containing alkenyl groups, an organopolysiloxane containing Si-H groups and a hydrosilylation catalyst may contain a cure inhibitor, as is known in silicone release coatings. Examples of suitable inhibitors include acetylenic compounds such as dimethyl hexynol (3,5-dimethyl-1-hexyn-3-ol), methyl butynol, or ethynyl cyclohexanol, and maleates such as bis(methoxylmethylethyl)maleate or diallylmaleate. If used, an inhibitor can for example be used at 0.01 to 3% by weight of the organopolysiloxane.

The curable organopolysiloxane composition can alternatively be a composition curing by siloxane condensation. Such compositions generally comprise a polymer containing reactive hydroxyl or hydrolysable groups bonded to silicon and a crosslinking agent containing groups reactive with the reactive groups of the polymer in the presence of moisture, and usually contain a siloxane condensation catalyst.

The polymer containing reactive hydroxyl or hydrolysable groups bonded to silicon is generally a polyorganosiloxane containing at least two hydroxyl or hydrolysable groups, preferably terminal hydroxyl or hydrolysable groups. The polymer can for example have the general formula

X¹-A'-X² (1)

where X¹ and X² are independently selected from silicon containing groups which contain hydroxyl or hydrolysable substituents and A' represents an organopolysiloxane polymer chain. Examples of X¹ or X² groups incorporating hydroxyl and/or hydrolysable substituents include groups terminating as described below:-
- Si(OH)₃, -(R^{c})Si(OH)₂, -(R^{c})₂SiOH, -R^{c}Si(OR^{d})₂, -Si(OR^{d})₃, -R^{c}₂SiOR^{d} or -R^{c}₂ Si -R^{e}-SiR^{f}ₚ(OR^{d})₃₋ₚ where each R^{c} independently represents a monovalent hydrocarbyl group, for example, an alkyl group, in particular having from 1 to 8 carbon atoms, (and is preferably methyl); each R^{d} and R^{f} group is independently an alkyl group having up to 6 carbon atoms; R^{e} is a divalent hydrocarbon group which may be interrupted by one or more siloxane spacers having up to six silicon atoms; and p has the value 0, 1 or 2. The organopolysiloxane polymer chain A' can for example have the formula -O(Q₂SiO)_{z}- wherein each Q denotes independently a phenyl group or an alkyl or cycloalkyl group having from 1 to 10 carbon atoms, for example methyl, ethyl, propyl, butyl or cyclohexyl and z is such that the organopolysiloxane has a viscosity at 25°C is in the range from 50 to 50000mPa.s. Suitably, at least some and preferably substantially all of the groups R^{c} are methyl.

The crosslinker for a polymer containing reactive hydroxyl or hydrolysable groups bonded to silicon preferably contains at least two and preferably at least three groups reactive with the silicon-bonded hydroxyl or hydrolysable groups. The reactive groups of the crosslinker are themselves preferably silanol groups or silicon bonded hydrolysable groups, most preferably hydrolysable groups. The cross-linker can for example be a silane or short chain organopolysiloxane, for example a polydiorganosiloxane having from 2 to about 100 siloxane units. The molecular structure of such an organopolysiloxane can be straight chained, branched, or cyclic. The hydrolysable groups in the crosslinker can for example be selected from acyloxy groups (for example, acetoxy, octanoyloxy, and benzoyloxy groups); ketoximino groups (for example dimethyl ketoximo, and isobutylketoximino); alkoxy groups (for example methoxy, ethoxy, an propoxy) and/or alkenyloxy groups (for example isopropenyloxy and 1-ethyl-2-methylvinyloxy). When the crosslinker is a silane having three silicon-bonded hydrolysable groups per molecule, the fourth group is suitably a non-hydrolysable silicon-bonded organic group such as an alkyl group, for example methyl, ethyl, propyl or butyl, or a cycloalkyl, alkenyl or aryl group. Examples of such crosslinkers include acyloxysilanes, particularly acetoxysilanes such as methyltriacetoxysilane, oxime-functional silanes such as methyltris(methylethylketoximo)silane, and alkoxysilanes, for example an alkyltrialkoxysilane such as methyltrimethoxysilane or methyltriethoxysilane. The crosslinking agent can alternatively be a short chain polydiorganosiloxane, for example polydimethylsiloxane, tipped with trimethoxysilyl groups. Silica can act as the crosslinking agent, particularly a silica having surface hydroxyl groups.

The curable organopolysiloxane coating compositions suitably contain the crosslinker in at least a stoichiometric amount as compared to the polymer containing reactive hydroxyl or hydrolysable groups bonded to silicon. Compositions may contain, for example, from 2-30% by weight of crosslinker, generally from 2 to 10%, based on the polymer containing reactive Si-bonded hydroxyl or hydrolysable groups.

Any suitable condensation catalyst may be utilised. These include protic acids, Lewis acids, organic and inorganic bases, transition metal compounds, metal salts and organometallic complexes. Preferred catalysts include organic tin compounds, particularly organotin salts and diorganotin dicarboxylate compounds such as dibutyltin dilaurate. Alternative catalysts include compounds of a transition metal selected from titanium, zirconium and hafnium, for example titanium tetraalkoxides, otherwise known as titanate esters.

The curable organopolysiloxane can alternatively be a branched silicone resin containing branching units of the type ZSiO_{3/2}, where each Z is a phenyl group or an alkyl, alkenyl or cycloalkyl group having from 1 to 10 carbon atoms, for example methyl, ethyl, propyl, butyl, octyl or cyclohexyl, and/or SiO_{4/2} branching units. Such a branched silicone resin may contain silanol groups or alkoxy groups bonded to silicon and may be curable by siloxane condensation. Alternatively a branched siloxane resin containing alkenyl groups Z can be cured by an organopolysiloxane containing Si-H groups, for example a polydimethylsiloxane containing Si-H terminal or pendant groups.

The curable organopolysiloxane composition can alternatively comprise an epoxide-functional organopolysiloxane, for example a polydimethylsiloxane substituted by pendant epoxyalkyl groups such as glycidyl or glycidoxyalkyl, for example 3-glycidoxypropyl, groups. Such an epoxide-functional organopolysiloxane can for example be cured by a crosslinking agent containing amine groups.

Examples of reactive silanes which will react with cellulose are silanes containing at least one SiOH group or Si-bonded alkoxy group, for example silanes of the formula Si(OZ')₄, Y'Si(OZ')₃ or Y'₂Si(OZ')₂ in which Y' represents an alkyl, substituted alkyl, aryl or substituted aryl group having 1 to 20 carbon atoms and each Z' represents an alkyl group having 1 to 6 carbon atoms. Preferably Y' represents an alkyl, substituted alkyl, aryl or substituted aryl group having 6 to 18 carbon atoms. Preferred silanes include those in which Y' represents an alkyl group having 6 to 18 carbon atoms and each Z' represents an alkyl group having 1 to 4, particularly 1 or 2, carbon atoms, for example n-octyl trimethoxysilane, 2-ethylhexyl triethoxysilane or n-octyl triethoxysilane. The silane can be partially hydrolyzed; for example it may have the formula Y'Si(OZ')₂(OH).

An example of a reactive polysiloxane which will react with cellulose is a polysiloxane having a high Si-H content, for example poly(methylhydrogensiloxane) or a dimethylsiloxane methylhydrogensiloxane copolymer comprising mainly methylhydrogensiloxane units.

The organosilicon material can alternatively be an organopolysiloxane which dries to form a hydrophobic film without being reactive. Such an organopolysiloxane can for example be a condensation product of one or more silane of the formula Y'Si(OZ')₃ or Y'₂Si(OZ')₂ as described above, preferably a silane in which Y' represents an alkyl group having 6 to 18 carbon atoms. The organosilicon material can for example be a branched silicone resin derived from n-octyl triethoxysilane. The organosilicon material can alternatively be a salt derived from a silane of the formula Y'Si(OZ')₃ or Y'₂Si(OZ')₂, for example potassium methylsiliconate.

The polyvinyl alcohol preferably has a degree of hydrolysis of 84 to 95% (unhydrolysed groups being generally acetate groups) although fully hydrolysed polyvinyl alcohol having a degree of hydrolysis of over 95%, usually 98 to 100%, is also suitable. The viscosity of polyvinyl alcohol is generally measured as the viscosity of a 4% aqueous solution at 20 °C, for example as determined by Hoppler viscometer according to DIN 53015. The viscosity of the polyvinyl alcohol used in the present invention is generally in the range 3 to 110 mPa.s, preferably 10 to 60 mPa.s.

The weight ratio of polyvinyl alcohol to organopolysiloxane in the coating compositions of the invention can be in the range from 1:2 up to 20:1, although the range from more than 2:1 up to 20:1 is preferred. Further preferred is the range from more than 2:1 up to 9:1.

The low molecular weight saccharide has a molecular weight below 2000, preferably below 1500 and more preferably below 1000. The low molecular weight saccharide can for example be a monosaccharide, a disaccharide or an oligosaccharide. Examples of monosaccharides include hexoses such as glucose, fructose, galactose, sorbitol (sorbose), mannose, allose, altrose, gulose, idose, talose, psicose, tagatose, fucose, fuculose or rhamnose, pentoses such as ribose, arabinose, xylose, lyxose, ribuluose, xylylose or deoxyribose, tetroses such as erythrulose, erythrose or threose, trioses, heptoses, octoses or nonoses. Examples of disaccharides include sucrose, lactose, maltose, trehalose, turanose or cellobiose. Examples of oligosaccharides include trisaccharides such as raffinose, melezitose or maltotriose, tetrasaccharides such as acarbose or stachyose, and higher oligosaccharides such as cyclodextrin, maltodextrin, fructooligsaccharide, galactooligosaccharide or mannan-oligosaccharides. The low molecular weight saccharide can contain other functional groups in addition to hydroxyl groups, for example carboxylic acid, ester, lactone, amide or amino groups. The low molecular weight saccharide can be substituted by alkyl groups, for example trimethylglucose.

The low molecular weight saccharide is preferably water soluble or water dispersible. Most preferably the saccharide is water soluble. Low molecular weight saccharides containing carboxylic acids are particularly suitable for retaining grease resistance and water resistance of the coated paper while reducing the viscosity of the coating composition. The low molecular weight saccharide can for example be gluconic acid, or talonic, glucuronic, ascorbic, mannonic, mannuronic, cellobiuronic or rhamnonic acid. Alternative low molecular weight saccharides which can be used include glucolactone, talolactone and gluconamide.

The weight ratio of low molecular weight saccharide to polyvinyl alcohol in the coating composition is generally in the range 1:1 to 1:100, preferably in the range 1:2 to 1:50, and more preferably between 1:4 and 1:20.

The coating composition of the invention can contain a wax to enhance the water repellency of the coated fibrous material. The wax can for example be a hydrocarbon wax such as a petroleum-derived wax, particularly a paraffin wax or microcrystalline wax, a Fischer-Tropsch wax, ceresin wax, a polyethylene wax, montan wax, ozokerite or slag wax or a mixture thereof. The wax can alternatively be a wax comprising carboxylic esters, for example beeswax, lanolin, tallow, carnauba, candelilla or tribehenin and waxes derived from plant seeds, fruits, nuts or kernel, such as palm wax, rice bran wax or soy wax. The wax can in a further alternative be a waxy silicone material, preferably a polysiloxane containing hydrocarbon substituents having 12 or more carbon atoms for example a polydiorganosiloxane comprising methyl alkyl siloxane units ((CH3)(R')SiO2/2), where R' is a long chain alkyl group having 12 or more, preferably 16 to 100 carbon atoms, optionally together with dimethyl siloxane units or units of the formula ((CH₃)(R")SiO_{2/2}) where R" is an alkyl group having 1-11 carbon atoms, a cycloalkyl group, a haloalkyl group or an aryl group. The waxy polysiloxane may be linear, branched or cyclic, and preferably has a melting point in the range 30-200°C, most preferably 50 to 80°C. The wax can for example be present at 0.1 to 50% by weight based on the polyvinyl alcohol.

The coating composition of the invention can contain a filler or pigment, particularly a reinforcing filler such as silica. A filler can for example be present at 0.1 to 50% by weight based on the reactive organosilicon material. The coating composition can contain an antifoam to inhibit frothing during production of the coating composition or during application of the coating. The coating composition can contain a biocide.

In one process according to the invention for the preparation of a coating composition, a reactive organosilicon material is mixed with an aqueous solution of polyvinyl alcohol and the mixture is homogenised to form an emulsion. According to a preferred aspect of the invention, the coating composition of the invention is free from any surfactant other than the polyvinyl alcohol.

In one convenient process the emulsion is mixed with further aqueous polyvinyl alcohol solution after homogenisation. The amount of polyvinyl alcohol mixed with the reactive organosilicon material before homogenising to form an emulsion can for example be much less than the total amount of polyvinyl alcohol in the coating composition. For example, the ratio of organosil to polyvinyl alcohol when forming the emulsion may be in the range 5:1 to 50:1 by weight.

The low molecular weight saccharide may conveniently be mixed with the organosilicon material emulsion and the polyvinyl alcohol solution. The saccharide can be premixed with either the emulsion or the polyvinyl alcohol solution or all three materials can be mixed simultaneously. Alternatively the saccharide can be mixed with the reactive organosilicon material before the organosilicon material is emulsified, or can be mixed with the polyvinyl alcohol solution used in emulsifying the organosilicon material.

The emulsion can be formed by subjecting the reactive organosilicon material and aqueous polyvinyl alcohol solution to high shear, for example in a mixer of the rotor and stator type or in an apparatus applying increased shear such as a homogeniser or microfluidiser, or a sonolator (ultrasonic mixer).

It may be preferred that the polyvinyl alcohol used in emulsification has a degree of hydrolysis of over 90%. If further polyvinyl alcohol solution is mixed with the emulsion, this further polyvinyl alcohol may have a degree of hydrolysis of 85 to 90% or a degree of hydrolysis of over 90%.

The further polyvinyl alcohol solution which is mixed with the emulsion is generally a viscous solution containing for example 6 to 15% by weight polyvinyl alcohol, as use of a more dilute solution would make application of a sufficiently thick coted film difficult and would require extra energy in drying the coating. If no low molecular weight saccharide is present, mixing of this solution with the emulsion is preferably carried out in a mixer designed to deal with thick pastes such as a dental mixer. If low molecular weight saccharide is present, a simpler mixer such as a proeller stirrer can be used.

To avoid premature reaction of a curable organopolysiloxane composition in the homogenising equipment, it may be preferred that not all the components of the organopolysiloxane composition are emulsified together. For example, the major part of the organopolysiloxane may be emulsified in the absence of crosslinking agent, with the crosslinking agent being added to the coating composition subsequently. For some curing chemistries, the organopolysiloxanes in the composition may be emulsified in the absence of catalyst, with the catalyst being added to the coating composition subsequently.

If the coating composition needs to be transported, or to be stored for later use, it may be preferred that the composition is stored in separate packages, for example with the major part of the organopolysiloxane being stored separately from the crosslinking agent, or with an organopolysiloxane and crosslinking agent being stored separately from a catalyst. Both of these packages can conveniently comprise polyvinyl alcohol.

For example, when the reactive organosilicon material is a curable organopolysiloxane composition comprising an organopolysiloxane containing alkenyl groups, an organopolysiloxane containing Si-H groups and a hydrosilylation catalyst, the organopolysiloxane containing alkenyl groups can be stored stably with either the organopolysiloxane containing Si-H groups or with the hydrosilylation catalyst. The organopolysiloxane containing Si-H groups and the hydrosilylation catalyst are less stable on storage together. A composition (A) comprising the organopolysiloxane containing Si-H groups and a composition (B) comprising the hydrosilylation catalyst can each be separately mixed with an aqueous solution of polyvinyl alcohol and separately homogenised to form an emulsion. The organopolysiloxane containing alkenyl groups can be mixed with either of these compositions; preferably both compositions (A) and (B) comprise a organopolysiloxane containing alkenyl groups. The emulsions thus formed can be packaged separately if necessary and can be mixed with each other and optionally with further polyvinyl alcohol solution when the coater is ready to use the coating composition. Alternatively one or both compositions can be mixed with further polyvinyl alcohol solution before storage. The saccharide of molecular weight below 1500 can be mixed with composition (A) and/or composition (B) either before or after homogenisation, or with the mixture of the emulsion of composition (A) and the emulsion of composition (B). The saccharide of molecular weight below 1500 can for example be added with the further polyvinyl alcohol solution.

Although the organopolysiloxane containing Si-H groups and the hydrosilylation catalyst are usually not stable on storage together, the stability is increased in the presence of a high level of excess polyvinyl alcohol relative to the curable organopolysiloxane, so that a composition containing an organopolysiloxane containing alkenyl groups, an organopolysiloxane containing Si-H groups and a hydrosilylation catalyst may have a pot life of several weeks. This may be long enough for distribution of the coating composition as a one-package coating.

The low molecular weight saccharide can alternatively be used according to the invention in a composition comprising dissolved polyvinyl alcohol and an emulsified curable organopolysiloxane composition where the organopolysiloxane composition has been emulsified using a surfactant, as described in US-B-7459213. In either type of composition addition of low molecular weight saccharide according to the invention advantageously reduces the viscosity of the coating composition, while maintaining the barrier properties of the coated paper.

Any suitable surfactant or combination of surfactants may be used in emulsifying the curable organopolysiloxane composition. The surfactant can in general be a non-ionic surfactant, a cationic surfactant, an anionic surfactant, or an amphoteric surfactant. The amount of surfactant used will vary depending on the surfactant, but generally is up to about 30 wt. % based on the polydiorganosiloxane, for example 0.2 to 20%. As described above in connection with emulsification using polyvinyl alcohol, it may be preferred that not all the components of the organopolysiloxane composition are emulsified together; this applies also to emulsification using surfactant.

Examples of nonionic surfactants include condensates of ethylene oxide with long chain fatty alcohols or fatty acids such as a C₄₋₁₆ alcohol, condensates of ethylene oxide with an amine or an amide, condensation products of ethylene and propylene oxide, esters of glycerol, sucrose, sorbitol, fatty acid alkylol amides, sucrose esters, fluoro-surfactants, fatty amine oxides, polyoxyalkylene alkyl ethers such as polyethylene glycol long chain (12- 14C) alkyl ether, polyoxyalkylene sorbitan ethers, polyoxyalkylene alkoxylate esters, polyoxyalkylene alkylphenol ethers and ethylene glycol propylene glycol copolymers.

Examples of suitable amphoteric surfactants include imidazoline compounds, alkylaminoacid salts, and betaines. Specific examples include cocamidopropyl betaine, cocamidopropyl hydroxysulfate, cocobetaine, sodium cocoamidoacetate, cocodimethyl betaine, N-coco-3-aminobutyric acid and imidazolinium carboxyl compounds.

Examples of cationic surfactants include quaternary ammonium halides or sulfates such as octyl trimethyl ammonium chloride, dodecyl trimethyl ammonium chloride, hexadecyl trimethyl ammonium chloride, octyl dimethyl benzyl ammonium chloride, decyl dimethyl benzyl ammonium chloride, didodecyl dimethyl ammonium chloride, dioctadecyl dimethyl ammonium chloride, tallow trimethyl ammonium chloride and coco trimethyl ammonium chloride, fatty amines and fatty acid amides and their derivatives, basic pyridinium compounds, quaternary ammonium bases of benzimidazolines and polypropanolpolyethanol amines.

Examples of suitable anionic surfactants include alkyl sulphates such as lauryl sulphate, polymers such as acrylic acid/C₁₀₋₃₀ alkyl acrylate crosspolymer, olefin sulfonates, alkylbenzenesulfonic acids and salts such as hexylbenzenesulfonic acid, octylbenzenesulfonic acid, decylbenzenesulfonic acid, dodecylbenzenesulfonic acid, cetylbenzenesulfonic acid and myristylbenzenesulfonic acid; the sulphate esters of monoalkyl polyoxyethylene ethers; alkylnapthylsulfonic acid; alkali metal sulforecinates, sulfonated glyceryl esters of fatty acids such as sulfonated monoglycerides of coconut oil acids, salts of sulfonated monovalent alcohol esters, amides of amino sulfonic acids, sulfonated products of fatty acid nitriles, sulfonated aromatic hydrocarbons, condensation products of naphthalene sulfonic acids with formaldehyde, sodium octahydroanthracene sulfonate, alkali metal alkyl sulphates, ester sulphates, and alkarylsulfonates.

The above surfactants may be used individually or in combination. After the curable organopolysiloxane composition has been emulsified, it is mixed with polyvinyl alcohol solution.

The substrate which is coated with the composition according to the invention can be fibrous material. For example it can be any type of paper substrate known for use as grease resistant paper, for example glassine, kraft paper or parchment paper. The coating compositions of the invention can form a grease resistant and water resistant paper from a lower grade paper, for example it may achieve grease resistant and water resistant properties when coated on kraft paper equivalent to the properties obtained from a conventional coating on glassine. The coating compositions of the invention can also be used for coating paper board, for example cardboard or corrugated board, to impart grease resistant and water resistant properties. The coating compositions of the invention can also be used for coating other fibrous materials including cellulosic fibres, such as nonwoven, woven or knitted textiles..

The coating compositions of the invention can be applied by any method known for coating fibrous materials, for example bar coating, roll coating, calender coating, spray coating, gravure coating or air knife coating. The coating can for example be applied at 1 to 20 g/m² on a dry weight basis, generally equivalent to about 10 to 200 g/m² wet coating.

### EXAMPLES

The invention is illustrated by the following Examples, in which parts and percentages are by weight unless otherwise noted.

Comparative Ex. C0: A polyvinyl alcohol solution was prepared by adding 10 g polyvinyl alcohol PVA1 having a viscosity (measured as the viscosity of a 4% aqueous solution at 20 °C) of 30mPa.s and a degree of hydrolysis of 88% into 90 g water, heating the solution to 90°C under agitation and after full dissolution, letting it cool down. This 10% PVA1 solution had a viscosity of 1140 mPa.s, measured with a Brookfield LV, Spindle S63 at 12 RPM.

A curable organopolysiloxane Emulsion A was prepared by loading 40 g water, then vinyl terminated polydimethylsiloxane (38 g) and poly(methylhydrogensiloxane) (1.8 g), then a 10 % aqueous solution of a polyvinyl alcohol PVA2 (20 g) and passing them through a high shear homogenizer. The polyvinyl alcohol PVA2 had a viscosity (measured as the viscosity of a 4% aqueous solution at 20 °C) of 30mPa.s and a degree of hydrolysis of 92%. Finally, 0.05 g of inhibitor (3,5-dimethyl-1-hexyn-3-ol) was added to give the Emulsion A.

A co-curable organopolysiloxane Emulsion B was prepared by loading 35 g water, then vinyl terminated polydimethylsiloxane (36 g) and 4g of a platinum catalyst complex which is the reaction product of chloroplatinic acid and divinyltetramethyldisiloxane (0.5%Pt), then a 10 % aqueous solution of PVA2 described above (25 g) and passing them through a high shear homogenizer to give the Emulsion B.

95g PVA1 solution, 4.5g Emulsion A and 0.5g Emulsion B were mixed in a dental mixer (DAC 150 FVZ) at 3540 rpm for 2 x 25 seconds. The resulting coating bath was allowed to stand for 15 minutes prior to application to the substrate. The coating bath had a viscosity of 1027 mPa.s, measured with a Brookfield LV, Spindle S63 at 12 RPM.

The coating was applied with a Braive Instrument bench top coater, using Mayer bar 60 to a 90 g/m² Kraft brown paper (supplied from Overtoom, Industrielaan 30, 1740 Ternat, Belgium) at a wet coated weight of 60 g/m². The coating was cured and dried in a ventilated oven preheated at 150°C. The coated paper sheet was placed in the oven for 30 seconds and then allowed to cool at room temperature. The dry coating weight was 6.9 g/ m²

Example 2: 85g PVA1 solution, 4.5g Emulsion A, 0.5g Emulsion B and 10g of a 10% aqueous gluconic acid solution were mixed in the dental mixer at 3540 rpm for 2 x 25 seconds and allowed to stand for 15 minutes. The resulting coating bath had a viscosity of 607 mPa.s, measured with a Brookfield LV, Spindle S63 at 12 RPM. The coating was applied to Kraft brown paper and cured and dried as described in Example 1.

Example 3: 75g PVA1 solution, 4.5g Emulsion A, 0.5g Emulsion B and 20g of a 10% aqueous gluconic acid solution were mixed in the dental mixer at 3540 rpm for 2 x 25 seconds and allowed to stand for 15 minutes. The resulting coating bath had a viscosity of 440 mPa.s, measured with a Brookfield LV, Spindle S63 at 12 RPM. The coating was applied to Kraft brown paper and cured and dried as described in Example 1.

Comparative Example C1: The PVA1 solution, without the organopolysiloxane emulsions, was applied to Kraft brown paper and cured and dried as described in Example 1.

Comparative Example C2: 4.5g Emulsion A and 0.5g Emulsion B were diluted with 95g water applied to Kraft brown paper and cured and dried as described in Comparative Example C0.

The greaseproof property of the coated papers produced in the Examples was measured by using the "3M Kit Test". The "3M Kit" is composed of 12 solutions composed of castor oil, toluene and n-heptane. Each is applied to a sample of the coated paper. The highest numbered solution (the most aggressive) that remained on the surface of the paper without causing failure is reported as the "3M Kit rating". The results are shown in Table 1 below

**Table 1**

| | 3M Kit Rating |
|---|---|
| Untreated paper | 1 |
| Comparative Example C0 | 11 |
| Example 2 | 12 |
| Example 3 | 12 |
| Comparative Example C1 | 12 |
| Comparative Example C2 | 1 |

In a further test of grease resistance, a piece of each coated paper 23cm x 23cm was folded in two parts of equal dimension, which were stapled together to obtain a bag while leaving a hole to fill with 50g of pet food. After filling, the bag was closed with staples. Two bags were prepared. One was stored in a climatic chamber (35°C and 70% humidity) and the other one at ambient room temperature and humidity (RT). After two weeks, we evaluated the grease-proof barrier performance with a rating on a scale of 0 (worst) → 5 (best), with 5 being nil grease stain going through the paper and 0 full coverage of the external face of the bag with grease stains. The results are shown in Table 2 below

**Table 2**

| | Pet food resistance room temperature | Pet food resistance climatic chamber |
|---|---|---|
| Untreated paper | 1.5 | 0 |
| Comparative Example C0 | 5 | 4.5 |
| Example 2 | 5 | 4.5 |
| Example 3 | 5 | 5 |
| Comparative Example C1 | 4.5 | 4 |
| Comparative Example C2 | 2.5 | 1 |

The water resistance of the coated papers was tested by the Cobb test. Samples of the coated paper 13cm x 13cm were weighed and each sample was then placed and clamped against the dry and clean cylinder of the Cobb tester so that the coated side of the paper contacted the water for 45 seconds. The weight increase of the coated paper was then measured. The Cobb value X is calculated using the following formula: X = 100 (a-b), where
a = weight of test piece after wetting, g
b = weight of test piece before wetting, g
The lower the Cobb value, the more water resistant is the coated paper. The Cobb values of the coated papers of the Examples are shown in Table 3 below

**Table 3**

| | Cobb Value |
|---|---|
| Untreated paper | 73.1 |
| Comparative Example C0 | 53.7 |
| Example 2 | 53.7 |
| Example 3 | 53.8 |
| Comparative Example C1 | 61.0 |
| Comparative Example C2 | 13.9 |

The printability of the coated papers was assessed by printing a red shape on the paper sheets with an Inkjet printer (HP Deskjet 6540) and measuring the color intensity of the printed shape with a Superchroma spectrophotometer supplied by Braive Instrument. The results are shown in Table 4 below

**Table 4**

| | Color intensity |
|---|---|
| Untreated paper | 36.4 |
| Example 1 | 33.7 |
| Example 2 | 37.7 |
| Example 3 | 38.1 |
| Comparative Example C1 | 42.4 |
| Comparative Example C2 | 17.1 |

The glueability of the coated papers was tested by applying an acrylic pressure sensitive adhesive tape '7475 TESA' supplied by Vetex to each coated paper. The taped papers were kept under a weight of 20 kg during 24h at room temperature. The force needed to remove the tape is measured with a Lloyd LRX apparatus equipped with a 10 N cell by peeling apart the paper and the tape at an angle of 180°.

On the untreated paper and each of the coated papers of Comparative Example C0, Example 2 and Example 3 and Comparative Example C1, the tape could not be removed without damaging the paper.
On the coated paper of Comparative Example C2, the tape could be removed by a force of 29.7N.

As shown by the above tests, Examples 2 and 3 are much better in term of 3M Kit grease resistance, pet food grease testing, printability and glueability than comparative example C2. Examples 2 and 3 are less sensitive to water and better in pet food grease testing than comparative example Cl.

As shown by Examples 2 and 3, the addition of gluconic acid gives a reduction in viscosity (thus easier to handle and easier to apply) while keeping or improving the grease resistance, water resistance, printability and glueability.

## Claims

1. An aqueous coating composition comprising dissolved polyvinyl alcohol and an emulsified organosilicon material, wherein the composition contains a saccharide of molecular weight below 2000.

2. A composition according to Claim 1, wherein the saccharide is a monosaccharide containing a carboxylic acid group.

3. A composition according to Claim 1 or Claim 2, wherein the weight ratio of saccharide to polyvinyl alcohol is in the range 1:2 to 1:50.

4. A composition according to any of Claims 1 to 3, wherein the weight ratio of polyvinyl alcohol to organosilicon material is in the range from more than 2:1 up to 20:1.

5. An aqueous coating composition according to any of Claims 1 to 4, wherein the composition is free from any surfactant other than the polyvinyl alcohol.

6. A composition according to any of Claims 1 to 5, wherein the organosilicon material is a curable organopolysiloxane composition.

7. A composition according to Claim 6, wherein the curable organopolysiloxane composition comprises an organopolysiloxane containing alkenyl groups, an organopolysiloxane containing Si-H groups and a hydrosilylation catalyst.

8. A composition according to any of Claims 1 to 6, wherein the organosilicon material is a silane or polysiloxane capable of reacting with cellulose or wherein the organosilicon material is a material which dries to form a hydrophobic film without reaction.

9. A composition according to any of Claims 1 to 8, wherein the weight ratio of polyvinyl alcohol to organosilicon material is in the range from more than 2:1 up to 9:1.

10. Use of a composition according to any of Claims 1 to 9 to enhance the grease resistance of a fibrous substrate.

11. Use of a saccharide of molecular weight below 2000 in a grease resistant aqueous coating composition comprising dissolved polyvinyl alcohol and an emulsified organosilicon material to reduce the viscosity of the composition while substantially retaining the barrier properties of the composition.

12. A process for the preparation of a coating composition in which an organosilicon material is mixed with an aqueous solution of polyvinyl alcohol and the mixture is homogenised to form an emulsion, wherein a saccharide of molecular weight below 2000 is mixed with the organopolysiloxane composition and the aqueous polyvinyl alcohol solution, either before or after homogenisation, preferably wherein further aqueous polyvinyl alcohol solution is mixed with the emulsion after homogenisation.

13. A process according to Claim 12, wherein a composition (A) comprising an organopolysiloxane containing alkenyl groups and an organopolysiloxane containing Si-H groups and a composition (B) comprising an organopolysiloxane containing alkenyl groups and a hydrosilylation catalyst are separately mixed with an aqueous solution of polyvinyl alcohol and separately homogenised to form an emulsion, and the emulsion of composition (A) and the emulsion of composition (B) thereby formed are mixed with each other and optionally with further polyvinyl alcohol solution, wherein the saccharide of molecular weight below 2000 is mixed with composition (A) and/or composition (B) either before or after homogenisation, or with the mixture of the emulsion of composition (A) and the emulsion of composition (B).

14. A process for treating a fibrous substrate to enhance its grease resistance, wherein a composition according to any of Claims 1 to 9 is applied to the fibrous substrate and is dried on the substrate.

15. A fibrous substrate coated with a composition according to any of Claims 1 to 9.

## Patentansprüche

1. Eine wässrige Beschichtungszusammensetzung, beinhaltend gelösten Polyvinylalkohol und ein emulgiertes siliciumorganisches Material, wobei die Zusammensetzung ein Saccharid eines Molekulargewichts unter 2000 enthält.

2. Zusammensetzung gemäß Anspruch 1, wobei das Saccharid ein Monosaccharid ist, das eine Carbonsäuregruppe enthält.

3. Zusammensetzung gemäß Anspruch 1 oder Anspruch 2, wobei das Gewichtsverhältnis von Saccharid zu Polyvinylalkohol im Bereich von 1 : 2 bis 1 : 50 liegt.

4. Zusammensetzung gemäß einem der Ansprüche 1 bis 3, wobei das Gewichtsverhältnis von Polyvinylalkohol zu siliciumorganischem Material im Bereich von mehr als 2 : 1 bis zu 20 : 1 liegt.

5. Wässrige Beschichtungszusammensetzung gemäß einem der Ansprüche 1 bis 4, wobei die Zusammensetzung frei von jeglichem Tensid außer dem Polyvinylalkohol ist.

6. Zusammensetzung gemäß einem der Ansprüche 1 bis 5, wobei das siliciumorganische Material eine aushärtbare Organopolysiloxanzusammensetzung ist.

7. Zusammensetzung gemäß Anspruch 6, wobei die aushärtbare Organopolysiloxanzusammensetzung ein Alkenylgruppen enthaltendes Organopolysiloxan, ein Si-H-Gruppen enthaltendes Organopolysiloxan und einen Hydrosilylierungskatalysator beinhaltet.

8. Zusammensetzung gemäß einem der Ansprüche 1 bis 6, wobei das siliciumorganische Material ein Silan oder Polysiloxan ist, das mit Cellulose reagieren kann, oder wobei das siliciumorganische Material ein Material ist, das trocknet, sodass es ohne Reaktion einen hydrophoben Film bildet.

9. Zusammensetzung gemäß einem der Ansprüche 1 bis 8, wobei das Gewichtsverhältnis von Polyvinylalkohol zu siliciumorganischem Material im Bereich von mehr als 2 : 1 bis zu 9 : 1 liegt.

10. Verwendung einer Zusammensetzung gemäß einem der Ansprüche 1 bis 9, um die Fettbeständigkeit eines Fasersubstrats zu verbessern.

11. Verwendung eines Saccharids eines Molekulargewichts unter 2000 in einer fettbeständigen wässrigen Beschichtungszusammensetzung, beinhaltend gelösten Polyvinylalkohol und ein emulgiertes siliciumorganisches Material, um die Viskosität der Zusammensetzung zu reduzieren, während die Barriereeigenschaften der Zusammensetzung im Wesentlichen beibehalten werden.

12. Ein Verfahren zur Herstellung einer Beschichtungszusammensetzung, bei dem ein siliciumorganisches Material mit einer wässrigen Lösung von Polyvinylalkohol gemischt wird und die Mischung homogenisiert wird, um eine Emulsion zu bilden, wobei ein Saccharid eines Molekulargewichts unter 2000 mit der Organopolysiloxanzusammensetzung und der wässrigen Polyvinylalkohollösung entweder vor oder nach der Homogenisierung gemischt wird, wobei vorzugsweise weitere wässrige Polyvinylalkohollösung nach der Homogenisierung mit der Emulsion gemischt wird.

13. Verfahren gemäß Anspruch 12, wobei eine Zusammensetzung (A), beinhaltend ein Alkenylgruppen enthaltendes Organopolysiloxan und ein Si-H-Gruppen enthaltendes Organopolysiloxan, und eine Zusammensetzung (B), beinhaltend ein Alkenylgruppen enthaltendes Organopolysiloxan und einen Hydrosilylierungskatalysator, separat mit einer wässrigen Lösung von Polyvinylalkohol gemischt und separat homogenisiert werden, um eine Emulsion zu bilden, und die dadurch gebildete Emulsion der Zusammensetzung (A) und Emulsion der Zusammensetzung (B) miteinander und optional mit weiterer Polyvinylalkohollösung gemischt werden, wobei das Saccharid eines Molekulargewichts unter 2000 mit Zusammensetzung (A) und/oder Zusammensetzung (B) entweder vor oder nach der Homogenisierung oder mit der Mischung der Emulsion der Zusammensetzung (A) und der Emulsion der Zusammensetzung (B) gemischt wird.

14. Ein Verfahren zum Behandeln eines Fasersubstrats, um dessen Fettbeständigkeit zu verbessern, wobei eine Zusammensetzung gemäß einem der Ansprüche 1 bis 9 auf das Fasersubstrat aufgebracht und auf dem Substrat getrocknet wird.

15. Ein Fasersubstrat, das mit einer Zusammensetzung gemäß einem der Ansprüche 1 bis 9 beschichtet ist.

## Revendications

1. Une composition de revêtement aqueux comprenant de l'alcool polyvinylique dissous et une matière d'organosilicium émulsifiée, la composition contenant un saccharide de poids moléculaire inférieur à 2 000.

2. Une composition selon la revendication 1, dans laquelle le saccharide est un monosaccharide contenant un groupe acide carboxylique.

3. Une composition selon la revendication 1 ou la revendication 2, dans laquelle le rapport en poids du saccharide à l'alcool polyvinylique est compris dans l'intervalle 1/2 à 1/50.

4. Une composition selon n'importe lesquelles des revendications 1 à 3, dans laquelle le rapport en poids de l'alcool polyvinylique à la matière d'organosilicium est compris dans l'intervalle allant de plus de 2/1 jusqu'à 20/1.

5. Une composition de revêtement aqueux selon n'importe lesquelles des revendications 1 à 4, la composition étant exempte de tout tensioactif autre que l'alcool polyvinylique.

6. Une composition selon n'importe lesquelles des revendications 1 à 5, dans laquelle la matière d'organosilicium est une composition d'organopolysiloxane durcissable.

7. Une composition selon la revendication 6, dans laquelle la composition d'organopolysiloxane durcissable comprend un organopolysiloxane contenant des groupes alcényle, un organopolysiloxane contenant des groupes Si-H et un catalyseur d'hydrosilylation.

8. Une composition selon n'importe lesquelles des revendications 1 à 6, dans laquelle la matière d'organosilicium est un silane ou polysiloxane capable de réagir avec la cellulose ou dans laquelle la matière d'organosilicium est une matière qui sèche pour former un film hydrophobe sans réaction.

9. Une composition selon n'importe lesquelles des revendications 1 à 8, dans laquelle le rapport en poids de l'alcool polyvinylique à la matière d'organosilicium est compris dans l'intervalle allant de plus de 2/1 jusqu'à 9/1.

10. Utilisation d'une composition selon n'importe lesquelles des revendications 1 à 9 pour augmenter la résistance aux graisses d'un substrat fibreux.

11. Utilisation d'un saccharide de poids moléculaire inférieur à 2 000 dans une composition de revêtement aqueux, résistante aux graisses, comprenant de l'alcool polyvinylique dissous et une matière d'organosilicium émulsifiée pour réduire la viscosité de la composition tout en conservant substantiellement les propriétés de barrière de la composition.

12. Un procédé pour la préparation d'une composition de revêtement dans laquelle une matière d'organosilicium est mélangée avec une solution aqueuse d'alcool polyvinylique et le mélange est homogénéisé pour former une émulsion, un saccharide de poids moléculaire inférieur à 2 000 étant mélangé avec la composition d'organopolysiloxane et la solution aqueuse d'alcool polyvinylique, soit avant soit après homogénéisation, davantage de solution aqueuse d'alcool polyvinylique étant, de préférence, mélangée avec l'émulsion après homogénéisation.

13. Un procédé selon la revendication 12, dans lequel une composition (A) comprenant un organopolysiloxane contenant des groupes alcényle et un organopolysiloxane contenant des groupes Si-H et une composition (B) comprenant un organopolysiloxane contenant des groupes alcényle et un catalyseur d'hydrosilylation sont mélangées séparément avec une solution aqueuse d'alcool polyvinylique et homogénéisées séparément pour former une émulsion, et l'émulsion de la composition (A) et l'émulsion de la composition (B) ainsi formées sont mélangées l'une avec l'autre et facultativement avec davantage de solution d'alcool polyvinylique, le saccharide de poids moléculaire inférieur à 2 000 étant mélangé avec la composition (A) et/ou la composition (B) soit avant soit après homogénéisation, ou avec le mélange de l'émulsion de la composition (A) et de l'émulsion de la composition (B).

14. Un procédé pour le traitement d'un substrat fibreux pour augmenter sa résistance aux graisses, dans lequel une composition selon n'importe lesquelles des revendications 1 à 9 est appliquée au substrat fibreux et est séchée sur le substrat.

15. Un substrat fibreux revêtu d'une composition selon n'importe lesquelles des revendications 1 à 9.
